# EUROPÄISCHE PATENTSCHRIFT

(11) **EP 0 542 674 B1**
(45) Veröffentlichungstag und Bekanntmachung des Hinweises auf die Patenterteilung: **08.05.1996**
(21) Anmeldenummer: 92810792.9
(22) Anmeldetag: 15.10.1992
(51) Int. Cl.: B24B 47/22, G05B 19/18

(54) **Verfahren zur numerisch steuerbaren Bearbeitung eines Werkstückes an einer Schleifmaschine**
Method for numerical controlled machining of a workpiece on a grinding machine
Procédé d'usinage à commande numérique d'une pièce sur une rectifieuse

(30) Priorität: 17.10.1991 CH 3033/91
(43) Veröffentlichungstag der Anmeldung: 19.05.1993
(73) Patentinhaber: L. KELLENBERGER & CO. AG, CH-9009 St. Gallen (CH)
(72) Erfinder: Ilek, Anton, CH-9034 Eggersriet (CH); Thurnherr, Hugo, CH-9008 St. Gallen (CH); Eugster, Emil, CH-9050 Appenzell (CH)
(74) Vertreter: Kulhavy, Sava V.

(56) Entgegenhaltungen:
- EP-A- 0 416 258
- DE-A- 3 736 463
- GB-A- 2 059 825
- US-A- 4 704 825
- US-A- 4 709 509
- US-A- 5 027 562

## Beschreibung

Die vorliegende Erfindung betrifft ein Verfahren zur numerisch steuerbaren Bearbeitung eines Werkstückes an einer Schleifmaschine, welche einen Halter für das Werkstück sowie einen mit einer oder mehreren Schleifscheiben ausgerüsteten Schleifkopf aufweist, wobei dieser Schleifkopf auf einem Werkzeugschlitten schwenkbar gelagert und zusammen mit diesem gegenüber dem Werkstückhalter verschiebbar ist.

Bei einem Verfahren gemäss EP-A 0 416 258 wird die Drehachse der Welle, auf der die Schleifscheibe sitzt, zunächst in eine zur Z-Achse parallele Lage gebracht. Ein Messtaster wird auf dem Halter für das Werkstück angebracht. Danach bewegt sich der Werkstückhalter, bis der Kopf des Messtasters eine der Seitenflächen der Schleifscheibe berührt und dann weiter so, bis der Zeiger des Messtasters auf Null zeigt. Diese Stellung des Werkzeughalters wird im Speicher der Maschine gespeichert. Hiernach wird der Schleifkopf um 10 Grad in einer Richtung gedreht und in dieser ersten Drehstellung angehalten. Der Zeiger des Messtasters bewegte sich dabei aus seiner Nullposition heraus. Der Werkstückhalter wird jetzt so bewegt, bis der Zeiger des Messtasters wiedrum auf Null zeigt und diese Stellung des Werkstückhalters wird ebenfalls gespeichert. Der Schleifkopf wird danach in gleicher Richtung um weitere 10 Grad gedreht, sodass er eine zweite Drehstellung erreicht. Während dieser Bewegung des Schleifkopfes entfernte sich der Zeiger des Messtasters aus seiner Nullstellung. Der Werkstückhalter wird wiederum so bewegt, bis der Zeiger des Messtasters auf Null zeigt. Diese Position des Werkstückhalters wird ebenfalls gespeichert. In diesem Verfahren wird die Lage der Schleifscheibe gegenüber dem Werkstück ermittelt.

Eine Schleifmaschine weist mehrere relativ zueinander bewegbare Teile auf. Das beschriebene, bekannte Verfahren setzt voraus, dass die gegenseitige Lage aller zueinander bewegbaren Maschinenteile bekannt und in den Speichern der Steuereinrichtung der Maschine gespeichert ist. Die Speicherung der genannten gegenseitigen Lagen der Maschinenteile setzt jedoch voraus, dass die diesen Lagen entsprechenden Werte in Erfahrung gebracht worden sind. Das Verfahren, in welchem diese Werte ermittelt werden, kann man als Ausmessung der Maschine bezeichnen.

Auch wenn die Lage der Maschinenteile zueinander am Anfang der Bearbeitung einer Anzahl von Werkstücken bekannt ist, kann es vorkommen, dass diese Lage sich während des Betriebes der Maschine ändert, was zur Folge hat, dass die Abmessungen der Erzeugnisse von den vorgegebenen Abmessungen abweichen. Ausserdem möchte man gern die Möglichkeit haben, sich während des Betriebes der Maschine jederzeit, ohne nennenswerten Zeitaufwand und wenn möglich automatisch davon überzeugen, ob die Lage der Maschinenteile zueinander unverändert ist. Falls sich die gegenseitige Lage geändert hat, so ist es wünschbar, das Mass der Abweichungen automatisch zu ermitteln und diese Abweichungen anschliessend ebenfalls automatisch zu beseitigen. Dies kann zur Erhöhung der Genauigkeit der Abmessungen der Erzeugnisse beitragen.

Wenn eine schnelle Ausmessung und Umstellung der Maschine möglich ist, dann müsste eine problemlose Umstellung der Maschine, um unterschiedliche Erzeugnisse herstellen zu können, ebenfalls möglich sein.

Als Nachteil des genannten bekannten Verfahrens bzw. der genannten bekannten Maschine gilt, dass sie die soeben genannten Möglichkeiten nicht bieten.

Die Aufgabe der vorliegenden Erfindung ist, ein Verfahren zu offenbaren, welches die genannten Nachteile nicht aufweisen.

Die genannte Aufgabe wird beim Verfahren der eingangs genannten Gattung erfindungsgemäss so gelöst, wie dies im kennzeichnenden Teil des Anspruchs 1 definiert ist.

Im vorliegenden Fall handelt es sich einerseits um ein Positionierverfahren für die Bestimmung der Relativlage zwischen einem Werkstück und einer Schleifscheibe bzw. den Arbeitskanten derselben an einer Rundschleifmaschine. Andererseits handelt es sich um eine steuerungsinterne Verrechnung der Positionsänderungen der Schleifscheibe, damit die resultierende Position der Schleifscheibe, nachdem diese geschwenkt worden ist, anhand der Koordinaten X und Z jederzeit zum Ausdruck gebracht und/oder angezeigt werden kann. Die Kenntnis der Lage der Schleifscheibe bzw. der Arbeitskanten derselben innerhalb des Koordinatensystems der Maschine ermöglicht ferner beispielsweise, eine Kompensationsbewegung der Schwenkachse des Schleifkopfes derart durchzuführen, dass die betreffende Arbeitskante der Schleifscheibe während der Schwenkbewegung des Schleifkopfes ortsfest ist.

Nachstehend werden Ausführungsmöglichkeiten der vorliegenden Erfindung anhand der beiliegenden Zeichnungen näher erläutert. Es zeigt:
Fig. 1 in Draufsicht und schematisch eine Schleifmaschine, bei welcher der Werkstückhalter als ein Schlitten ausgeführt ist,
Fig. 2 einen Ausschnitt aus Fig. 1, in welchem von der Maschine nur diejenigen Teile erscheinen, die für die Ausmessung der Lage des Schlittenbezugspunktes gegenüber dem Nullpunkt der Maschine erforderlich sind,
Fig. 3 einen Ausschnitt aus Fig. 1, in welchem von der Maschine nur diejenigen Teile erscheinen, die für die Ausmessung der Lage eines Referenzpunktes gegenüber dem Nullpunkt der Maschine erforderlich sind,
Fig. 4 einen Ausschnitt aus Fig. 1, in welchem von der Maschine nur diejenigen Teile erscheinen, die für die Ausmessung der Lage eines Werkzeug-Einspannpunktes gegenüber dem Nullpunkt der Maschine erforderlich sind,
Fig. 5 schematisch Punkte, deren Koordinaten am Ende der Ausmessung der Maschine bekannt sind,
Fig. 6 einen Ausschnitt aus Fig. 1, in welchem von der Maschine nur diejenigen Teile erscheinen, die für die Ausmessung der Lage eines Messwürfels am Maschinenbett erforderlich sind,
Fig. 7 einen Ausschnitt aus Fig. 1, in welchem von der Maschine nur diejenigen Teile erscheinen, die für die Ausmessung der Lage der Schleifscheibe der Maschine erforderlich sind,

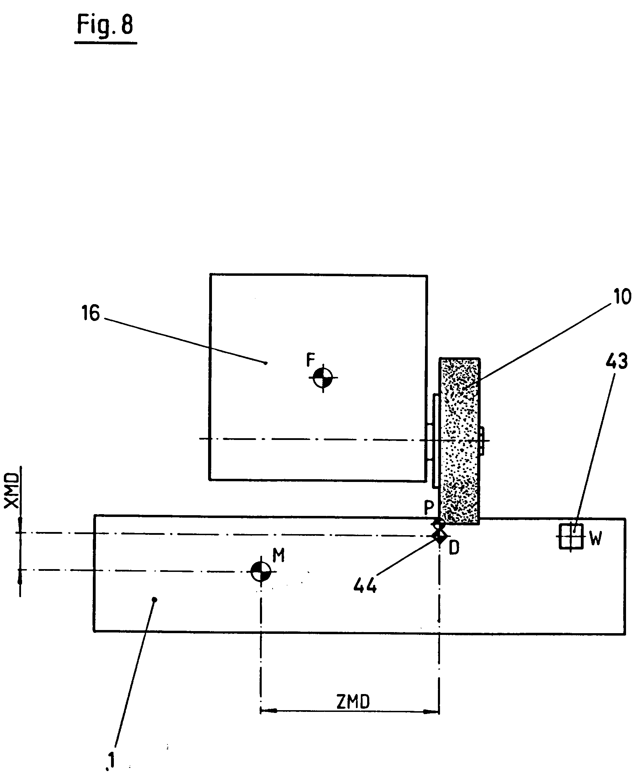

Fig. 8 einen Ausschnitt aus Fig. 1, in welchem von der Maschine nur diejenigen Teile erscheinen, die für die Ausmessung der Lage eines Abrichtdiamanten gegenüber dem Nullpunkt der Maschine erforderlich sind,
Fig. 9 einen Ausschnitt aus Fig. 1, in welchem von der Maschine nur diejenigen Teile erscheinen, die für die Ausmessung der Lage des Werkstück-Nullpunktes erforderlich sind und
Fig. 10 einen Fig. 1 ähnelnden Ausschnitt aus einer Schleifmaschine, bei welcher der Werkstückhalter mit dem Maschinenbett fest verbunden ist und bei welcher der Werzeugschlitten einen der Bestandteile eines Kreuzschlittens darstellt.

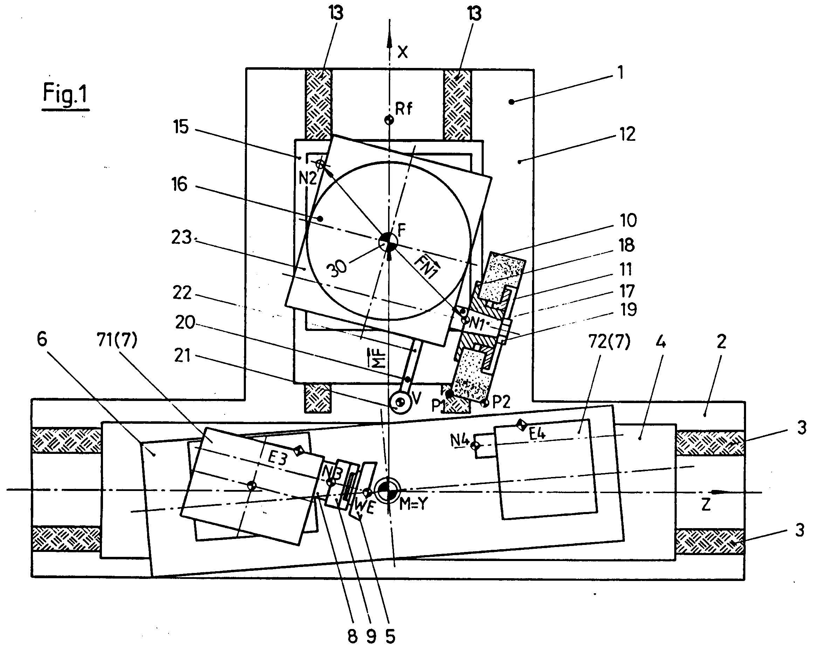

Eine der Schleifmaschinen, an welchen das vorliegende Verfahren angewendet werden kann, ist in Fig. 1 in Draufsicht und schematisch dargestellt. Diese Maschine weist ein Bett bzw. einen Ständer 1 auf, welcher einen im wesentlichen T-förmigen Grundriss hat. Auf der Oberseite des Balkenteiles 2 dieses T-förmigen Bettes 1 sind Führungsmittel 3 für einen entlang diesem verschiebbaren Schlitten 4 ausgeführt. Dieser Schlitten 4 ist zur Aufnahme eines Werkstückes 5 vorgesehen und deswegen wird dieser im Nachstehenden auch als Werkstückschlitten bezeichet.

Im dargestellten Fall ist ein Tisch 6 auf dem Werkstückschlitten 4 schwenkbar gelagert. Auf diesem Tisch 6 ist eine Einspannvorrichtung 7 für das Werkstück 5 vorgesehen, welche einen Spindelstock 71 und einen Reitstock 72 umfasst, wobei der Spindelstock 71 auf dem Schwenktisch 6 schwenkbar gelagert ist. Der Spindelstock 71 enthält eine Welle 8 und am freien Ende dieser Welle 8 ist ein Einspannkopf 9 für das Werkstück 5 befestigt.

Auf der Oberseite des Stielteiles 12 des T-förmigen Maschinenbettes 1 sind Führungsmittel 13 für einen entlang diesem Stielteil 12 des Ständers 1 bewegbaren Schlitten 15 vorgesehen. Auf diesem Schlitten 15 ist ein Schleifkopf 16 schwenkbar bzw. drehbar gelagert. Dieser Schlitten 15 wird auch als Schleifschlitten 15 bezeichnet. Von zumindest einer der Seitenwände des Gehäuses des Schleifkopfes 16 steht eine Welle 11 ab, an deren Ende eine Schleifscheibe 10 auswechselbar befestigt ist. Diese Befestigung erfolgt vorteilhaft mit Hilfe eines Konusses 17 am Ende der Welle 11 und eines Futters 18 in der Schleifscheibe 10, welches auf dem Konus 17 sitzt. Die Scheibe 10 ist mit Hilfe einer Mutter 19 an der Welle 11 befestigt, welche auf einer Auslaufpartie (nicht dargestellt) des Konusses 17 aufschraubbar ist.

Von einer der Seitenwände des Schleifkopfes 16, welche vorteilhaft von jener Seitenwand des Kopfes 16 unterschiedlich ist, in der die Welle 11 gelagert ist, steht ein Messtaster 20 ab, welcher eine Kugel 21 und eine Distanzstange 22 umfasst. Die Kugel 21 ist über die Distanzstange 22 am Schleifkopf 16 befestigt. Die Abmessungen sowohl der Stange 22 als auch der Kugel 21 sind bekannt und sie gehören zu den der Maschine vorgegebenen Daten. Der Mittelpunkt der Kugel 21 des Messtasters 20 ist mit V bezeichnet. Dieser Mittelpunkt V kann auch als Messpunkt angesehen werden, weil auf diesen sich die Koordinaten X und Z beziehen, welche die Position des Tasterkopfes 21 im Koordinatensystem X,Z der Maschine angeben.

Damit die numerisch steuerbare Bearbeitung des Werkstückes 5 mit Hilfe der Schleifscheibe 10 möglich ist, sind besimmte Punkte an der Maschine vorgesehen, anhand welcher sich das die Werkstückbearbeitung steuernde Computerprogramm während der Steuerung der Bewegung des Schleifkopfes 10 orientieren kann. Als erster dieser Punkte kann der sogenannte Nullpunkt M der Maschine erwähnt werden. Dieser befindet sich bei diesem Typ von Schleifmaschine im Bereich des Werkstückschlittens 4. Im dargestellten fall fällt der Maschinennullpunkt M mit der vertikal, d.h. senkrecht zur Blattebene verlaufenden Schwenkachse des Werkstücktisches 6 zusammen. In diesem Nullpunkt M befindet sich auch der Nullpunkt des Koordinatensystems der Maschine. Die X-Achse des Koordinatensystems verläuft in der Längsrichtung des Stielteiles 12 des T-förmigen Ständers 1. Die Z-Achse dieses Koordinatensystems verläuft in der Längsrichtung des Balkenteiles 2 des T-förmigen Bettes 1. Die Y-Achse verläuft vertikal bzw. senkrecht zum Bett 1 und sie fällt mit der Achse des Schwenktisches 6 zusammen. Im vorliegenden fall geht die Y-Achse durch den Maschinennullpunkt M hindurch.

Einen weiteren der genannten Punkte stellt der sogenannte Referenzpunkt Rf der Maschine dar. Dieser Punkt Rf befindet sich in einem Bereich des Bettes 1, von dem man annimmt, dass der Kopf 16 während der Bearbeitung des Werkstückes 5 dorthin kaum gelangen wird, welcher jedoch durch den Schleifkopf 16 angefahren werden kann. Der Referenzpunkt Rf befindet sich in einem Abstand vom Nullpunkt M der Maschine. Der Referenzpunkt Rf kann mit Hilfe von elektromechanischen Mitteln, beispielsweise von Endschaltern, definiert bzw. simuliert werden.

Am Schleifkopf 16 befindet sich ein Punkt F, durch welchen die Schwenkachse dieses Kopfes 16 hindurchgeht. Dieser Punkt F kann auch als Schlittenbezugspunkt bezeichnet werden. Der Referenzpunkt Rf am Bett 1 gilt als durch den Schleifkopf 16 angefahren, wenn der Schlittenbezugspunkt F genau über dem Referenzpunkt Rf liegt. Weitere Punkte an der Maschine, welche im vorliegenden Zusammenhang von Bedeutung sind, werden im nachstehenden näher beschrieben.

Bevor eine numerisch gesteuerte Schleifmaschine in Betrieb genommen werden kannn, muss sie ausgemessen werden. Dies bedeutet, dass die Lage jener Punkte an der Maschine ermittelt werden muss, welche dem Steuerprogramm als massgebende Punkte dienen. Die Koordinaten X und Z dieser Punkte werden gespeichert. Am meisten Probleme bereitet die Ausmessung der Lage des Punktes F, bzw. der Drehachse des Schleifkopfes 16 gegenüber dem Nullpunkt M der Maschine. Dies deswegen, weil der Schleifkopf 16 auf dem Schleifschlitten 15 sitzt und gegenüber dem Nullpunkt M am Werkstückschlitten 4 in einer Ebene, in welcher auch die Achsen X und Z liegen, bewegbar ist. Die Ermittlung der Lage des Punktes F ist zudem noch dadurch erschwert, dass es an der Maschine keinen Taster oder ähnlich gibt, mit dessen Hilfe die Lage der Drehachse F genau, d.h. entsprechend der geforderten Genauigkeit der Bearbeitung durch Schleifen, ermittelt werden könnte. Im Prinzip könnte man einen Masstab nehmen und die Maschine von Hand ausmessen. Die ermittelten Werte könnten dann in die Maschine in der üblichen Weise eingegeben werden. Einem solchen Verfahren würde jedoch eben jene Genauigkeit fehlen, welche für die geforderte Genauigkeit der Bearbeitung erforderlich ist.

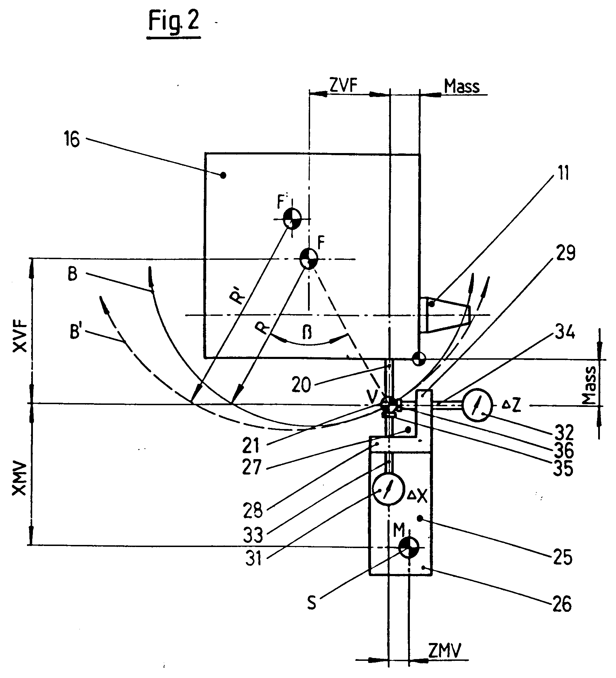

Fig. 2 stellt im wesentlichen einen Ausschnitt aus Fig. 1 dar, in welchem von der Maschine nur diejenigen Teile dargestellt sind, welche für die Ausmessung der Lage des Schlittenbezugspunktes bzw. der Achse F gegenüber dem Nullpunkt M erforderlich sind. Vom Maschinenbett 1 ist in Fig. 2 nur der Nullpunkt M dargestellt. Es ist eine Messvorrichtung 25 vorgesehen, welche eine Grundplatte 26 umfasst, wobei diese Grundplatte 26 am Werkstückschlitten 4 angebracht ist. Die Grundplatte 26 weist eine Referenzmarke S auf, welche als ein Kreuz angedeutet ist. Der Kreuzmittelpunkt dieser Marke S ist dem Nullpunkt M der Maschine exakt zugeordnet. Die Messvorrichtung 25 kann auch an anderen Stellen des Werkstückschlittens 4 aufgestellt sein.

In einer der Eckpartien der Grundplatte 26 der Messvorrichtung 25 ist ein rechtwinkliger Ausschnitt 27 ausgeführt. Dem jeweiligen Schenkel 28 und 29 dieses Ausschnittes 27 ist eine Messuhr 31 bzw. 32 derart zugeordnet, dass der Messbolzen 33 bzw. 34 der jeweiligen Messuhr 31 bzw. 32 rechtwinklig zu jenem Winkelschenkel 28 bzw. 29 steht, durch welchen er hindurchgeht. Die Stirnflächen von Stirnplatten 35 bzw. 36 an den Enden der Messbolzen 33 bzw. 34 schliessen somit zwischen sich ebenfalls einen rechten Winkel und sie können Anschlagflächen für die Kugel 21 des am Bearbeitunoskopf 16 angebrachten Messtasters 20 bilden. Wenn sich die Kugel 21 des Messtasters 20 in der in Fig. 2 dargestellten Lage gegenüber der Messvorrichtung 25 befindet, dann geben die Messuhren 31 und 32 zusammen mit dem Abstand derselben vom Nullpunkt M der Grundplatte 26 den Abstand des Kugelmittelpunktes V vom Nullpunkt M in der X-Richtung als XMV und in der Z-Richtung als ZMV an. Die Abstände der Achse F vom Kugelmittelpunkt V sind mit XVF und ZVF angedeutet, wobei diese Abstände unveränderlich sind, weil der Messtaster am Schleifkopf 16 befestigt ist.

Sollte sich die Lage der Kugel 21 gegenüber der Messvorrichtung 25 nur ein wenig ändern, dann würden sich nur die durch die Messuhren 31 und 32 angegebenen Strecken Delta X bzw. Delta Z ändern. Bei einer Verstellung der Kugel 21, deren Länge grösser ist als die Bewegungsbahn der Messbolzen 33 und 34, müsste die ganze Messvorrichtung 25 dementsprechend verstellt werden, damit die Lage der Kugel 21 ermittelt werden kann.

Es versteht sich, dass der Schleifkopf 16 mit Hilfe eines entsprechenden und nicht dargestellten Antriebes um die Welle 30 bzw. um seine Achse F geschwenkt werden kann, und zwar unabhängig davon, ob die genaue Lage des Punktes F gegenüber dem Nullpunkt M bekannt ist oder nicht. Die Schwenkachse F verläuft parallel mit der Achse Y des Koordinatensystems der Maschine. Der Abstand R bzw. R' des Kugelmittelpunktes V vom Drehpunkt F ist unveränderlich, weil der Messtaster 20 am Schleifkopf 16 befestigt ist. Die Grösse dieses Abstandes R bzw. R' ist aus der Sicht der Maschine bzw. des Maschinenprogramms jedoch noch nicht genau bekannt, weil die Lage des Punktes F der Maschine nach nicht bekannt ist. Wenn der Kugelmittelpunkt V um die Achse F herum geschwenkt wird, dann bewegt sich V entlang einer Bahn B bzw. B', welche die Form eines Kreisbogens aufweist. R bzw. R' ist der Radius des entsprechenden Kreises und F ist das Zentrum dieses Kreises.

Bei der Ermittlung der genauen Lage des Punktes F geht man von einer angenommenen bzw. groben und z.B. durch Handmessung ermittelten Lage dieses Punktes F gegenüber dem Nullpunkt M der Maschine sowie von einem Radius R' aus, welcher ebenfalls grob, beispielsweise durch Handmessung, ermittelt worden ist. Diese Angaben können von Hand in die Maschine eingegeben werden und sie dienen als Ausgangsdaten, welche in den folgenden Schritten präzisiert werden. Zur Präzisierung dieser Daten wird die Messvorichtung 25 so positioniert, dass die Referenzmarke S der Messvorrichtung 25 in der bereits beschriebenen Weise mit dem Nullpunkt M der Maschine in Deckung gebracht wird. Der Tasterkopf 21 wird mit den Stirnplatten 35 und 36 der Messvorrichtung 25 in Anschlag gebracht und die Lage des Kugelmittelpunktes V wird mit Hilfe der Messuhren 31 und 32 und ausgehend von den bekannten Abmessungen der Kugel 21 genau festgestellt. Diese Werte können als Koordinaten des Messpunktes V im Massystem der Maschine zum Ausdruck gebracht werden und in der Maschine gespeichert werden.

Zur Durchführung des vorliegenden Verfahrens wird der Messtaster 20 am Schleifkopf 16, vorteilhaft an seinem Gehäuse 23, angebracht. Die Messvorrichtung 25 wird auf dem Werkstückschlitten 4 derart angeordnet, dass die Marke S an dieser Messvorrichtung 25 genau über dem Nullpunkt M der Maschine liegt. Der Kopf 21 des Messtasters 20 wird zur Auflage auf den Stirnplatten 35 und 36 der so angeordneten Messvorrichtung 25 gebracht. Der Tasterkopf 21 befindet sich jetzt in seiner Anfangs- bzw. Ausgangslage und die Koordinaten des Messpunktes V am Tasterkopf 21 werden aufgrund der durch die Messvorrichtung 25 gelieferten Daten in einer Steuereinheit gespeichert, welche einen der Bestandteile der Maschine darstellt. Die Schwenkachse des Schleifkopfes 16 befindet sich jetzt in ihrer ersten Lage F und die Koordinaten dieser Lage, welche bloss angenommen werden oder welche sich aus einer Vermessung der Maschine mit Hilfe eines Masstabes ergaben, werden in der Steuereinheit ebenfalls gespeichert. Diese Daten werden gespeichert, damit sie während des weiteren Verlaufs dieses Verfahrens überprüft und wenn erforderlich auch präzisiert werden können.

Hiernach wird durch die Steuereinheit, welche auch einen Rechner enthält, errechnet, wo sich der Messpunkt V am Tasterkopf 21 befinden würde bzw. sollte, wenn der um die Schwenkachse 30 bzw. um das Drehzentrum F schwenkbare Schleifkopf 16 um einen vorgegebenen Winkel verschwenkt wird. Weil der Schleifkopf 16 um seine Welle 30 geschwenkt wird, ist es im voraus bekannt, dass die Bahn B, entlang welcher sich der Punkt V am Tasterkopf 21 bewegen wird, die Form eines Kreisabschnittes haben wird. Unbekannt ist in diesem Moment jedoch noch die genaue Lage des Drehzentrums F in Bezug auf den Ursprung des Koordinatensystems X,Z der Maschine.

Die Koordinaten der errechneten End- bzw. Schwenklage des Messpunktes V werden in der Steuereinheit gespeichert. Danach wird der Schleifkopf 16 um den vorgegebenen Winkel um die Welle 30 geschwenkt. Dieser Winkel Beta kann beispielsweise 30 Grad betragen und die Schwenkbewegung kann im Uhrzeigersinn um die Achse F bzw. F' durchgeführt werden. Mit F' ist jene Stellung der Schwenkachse 30 des Schleifkopfes 16 bezeichnet, welche sich aufgrund einer groben Messung ergab. Mit F ist in Fig. 1 jene Stellung der Schwenkachse 30 des Schleifkopfes 16 bezeichnet, welche aus dem hier erläuterten Verfahren resultiert. Entsprechendes gilt hinsichtlich der Definition der Parameter bzw. Halbmesser R und R' sowie der Bahnen B und B'.

Nachdem der Tasterkopf 21 seine genannte End- bzw. Schwenklage erreicht hat, wird es geprüft, ob eine Abweichung zwischen der tatsächlichen und der im voraus errechneten End- bzw. Schwenklage des Tasterkopfes 21 vorhanden ist. Dies kann in der Weise ermittelt werden, dass der Werkstückschlitten 4, auf dem die Messvorrichtung 25 angeordnet ist, in der Richtung der Z-Achse in jenen Bereich der Maschine verschoben wird, wo sich der Tasterkopf 21 gemäss den genannten Berechnungen befinden soll. Der Schleifkopf 16, welcher den Messtaster 21 trägt, wird dagegen in der Richtung der X-Achse so weit verschoben, bis der Tasterkopf 21 mit der Messvorrichtung 25 ebenfalls in Berührung gelangt.

Das Massystem der Maschine für die Richtung der Z-Achse gibt, gegebenenfalls in Kombination mit der betreffenden Messuhr 32 der Messvorrichtung 25, die tatsächliche Z-Koordinate des Punktes V im Tatserkopf 21 an, wobei diese Strecke sich aus dem Weg des Werkstückschlittens 4 ergab. Der Wert dieser Koordinate, weil er durch das Massystem der Maschine ermittelt worden ist, kann in der Maschine, vorteilhaft automatisch, gespeichert werden. Das Massystem der Maschine für die Richtung der X-Achse erlaubt, gegebenenfalls in Kombibation mit der betreffenden Messuhr 31 der Messvorrichtung 25, die tatsächliche X-Koordinate des Punktes V im Tatsterkopf 2 zu ermitteln, wobei diese Strecke sich aus der Verschiebung des Schleifkopfes 16 bis zum Anschlag des Tasterkopfes 21 am Messbolzen 33 der Messuhr 31 ergibt.

Am Anfang der Messung wird in den meisten Fällen die tatsächliche Lage des Kugelmittelpunktes V am Ende der Schwenkbewegung von der errechneten bzw. angenommenen Lage desselben wegen der Ungenauigkeit der Lage der Schwenkachse F' und der Ungenauigkeit der Grösse von Radius R' abweichen. Die Grösse dieser Abweichung kann mit Hilfe der Messuhren 31 und 32 an der Messvorrichtung 25 genau fetsgestellt werden. Die Angaben der Messuhren 31 und 32 können als Strecken Delta X und Delta Z in den Speicher der Maschine eingegeben werden.

Für das weitere Vorgehen sind jetzt bekannt die Koordinaten der ursprünglichen Ausgangslage des Kugelmittelpunktes V, die angenommene Endlage desselben nach dem Verschwenken der Kugel 21 um den Winkel Beta von 30 Grad und die reale Endlage des Kugelmittelpunktes V nach dem genannten Verschwenken der Kugel 21. Die Koordinaten dieser drei Punkte sind in der Maschine gespeichert. Ausgehend von diesen Werten kann die Maschine in einem an sich bekannten mathematischen Verfahren, wie z.B. anhand einer Kreisregression, die Abweichung der angenommenen Lage des Drehzentrums F des Schleifkopfes 16 von der realen Lage F' desselben ermitteln. Die in der Maschine gespeicherten Koordinaten über die ursprünglich angenommene Lage des Drehzentrums F' werden dementsprechend korrigiert.

Wenn es eine Abweichung zwischen der tatsächlichen und der errechneten Endlage des Tasterkopfes 21 gibt, dann wird der Tasterkopf 21 aus seiner Endlage in seine Anfangslage zurückgeschwenkt. Die Welle 30 des Schleifkopfes 16 wird gegenüber dem Maschinenbett 1 derart verschoben, dass das Drehzentrum F' sich in der durch das Korrekturverfahren ermittelten Position befindet. Die Welle 30 des Schleifkopfes 16 wird somit um eine kurze Strecke in einer Richtung verschoben, so dass die Schwenkachse 30 des Schleifkopfes 16 in eine andere Lage F' gebracht wird. Ausgehend von der korrigierten Lage der Drehachse F' und des korrigierten Radius R' wird eine neue, angenommene Endlage der Kugel 21 am Ende der genannten Schwenkbahn B' des Schleifkopfes 16 errechnet. Dies geschieht in der Steuereinheit, in der die jetzt zu erwartende Schwenklage des Tasterkopfes 21 errechnet wird wenn dieser um einen vorgegebenen Winkel verschwenkt wird. Dieser Winkel kann jenem Winkel gleichen, welcher bei der vorher genannten Schwenkbewegung des Schleifkopfes 16 gewählt worden ist. Der Schleifkopf 16 wird jetzt um den vorgegebenen Winkel geschwenkt und es wird in der vorstehend genannten Weise geprüft, ob es eine Abweichung zwischen der tatsächlichen und der errechneten Schwenklage des Tasterkopfes 21 gibt.

Die Maschine vergleicht die Grösse der genannten Abweichungen bei aufeinander folgenden Messgängen. Wenn die Grösse der Abweichungen zunimmt, dann ist die Schwenkwelle 30 des Schleifkopfes 16 in falscher Richtung verschoben worden. Die Verschieberichtung der Schwenkwelle 30 des Schleifkopfes 16 wird in einem solchen Fall geändert. Die Schwenkwelle 30 wird in der geänderten Richtung verschoben und ein weiterer Messgang wird durchgeführt. Nach Beendigung dieses Messganges wird die Grösse der gerade festgestellten Abweichung mit jener Abweichung verglichen, welche im vorher durchgeführten Messgang ermittelt worden ist. Die Lage der Schwenkwelle 30 wird dementsprechend geändert und ein weiterer Messgang wird durchgeführt. Die Messgänge werden mit der Maschine so lange durchgeführt, bis es keine Abweichung zwischen der errechneten und der tatsächlichen End- bzw. Schwenklage des Tasterkopfes 21 gibt. In diesem Fall werden die Koordinaten der Schwenkachse F des Schleifkopfes 16 gespeichert, damit man sie später verwenden kann.

Wenn es keine Abweichung mehr gibt, dann stimmt die angenommene Lage der Kugel 21 mit der realen Lage derselben überein. Dies ergibt sich aus der Uebereinstimmung der Koordinaten des Messpunktes V an der Kugel 21 in der Anfangs- und in der Endlage der Schwenkbewegung. Von diesem Moment an gilt, dass auch die richtigen und genauen Koordinaten der Drehachse F im Koordinatensystem der Maschine ermittelt worden sind, welche in der Maschine gespeichert werden können. folglich ist jetzt auch die Entfernung zwischen der Drehachse F und dem Nullpunkt M der Maschine bekannt oder zumindest jederzeit genau feststellbar, weil die Lage des Maschinen-Nullpunktes M durch die Konstruktion der Maschine gegeben ist.

Die bereits erwähnte kreisabschnittförmige Bewegungsbahn B des Messpunktes V kann durch einige und an dieser Bahn B liegende Punkte derselben approximiert werden. Die Koordinaten dieser Punkte können, beispielsweise mit Hilfe der am Werkstückhalter angebrachten Messvorrichtung 25, gemessen werden. Diese Punkte können zur Ermittlung der Koordinaten des Drehzentrums F des Schleifkopfes 16 benützt werden. Hierbei geht die Maschine von den Koordinaten der Punkte jener Bewegungsbahn B des Tasterkopfes 21 aus, bei der es keine Abweichung zwischen der errechneten und der tatsächlichen Endlage des Tasterkopfes 21 gibt. Ausgehend von den Koordinaten dieser Punkte sowie von den Koordinaten der Lage des Drehzentrums F des Schleifkopfes 16 wird der Radius R jenes Kreisbogens ermittelt, welchen die Bewegungsbahn B bildet. Dies erfolgt unter Benützung von an sich bekannten mathematischen Verfahren .

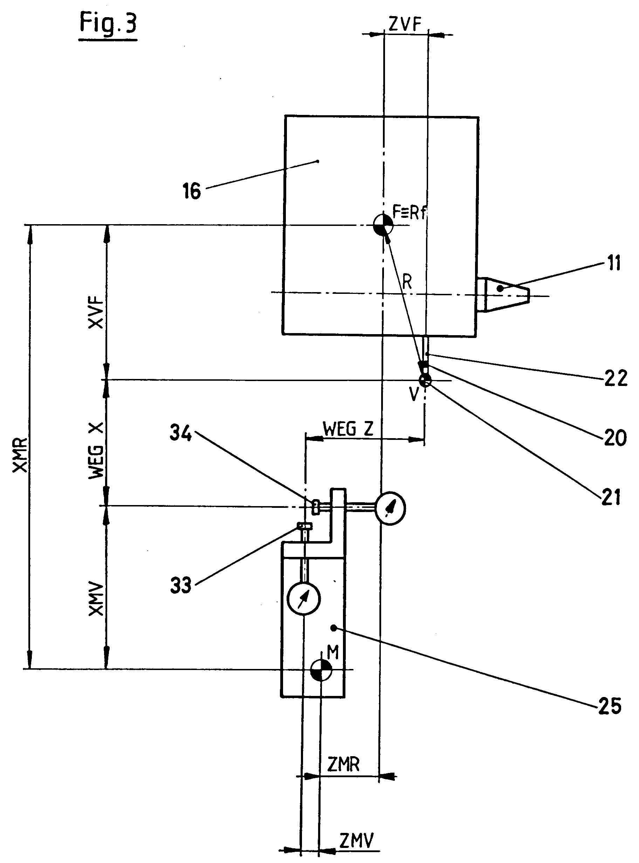

Die Ermittlung der Koordinaten des Referenzpunktes Rf kann anhand von Fig. 3 dargelegt werden. Wie bereits erörtert worden ist, ist die Lage der Drehachse F des Schleifkopfes 16 bereits bekannt und und die Koordinaten dieser Lage sind in der Maschine gespeichert. Zur Ermittlung der Koordinaten des Referenzpunktes Rf wird der Schleifkopf 16 bewegt, bis die Drehachse desselben bzw. der dieser entsprechende Punkt F mit dem Referenzpunkt Rf am Maschinenbett 1 in Deckung gebracht wird. Da das Massystem der Maschine in jedem Moment die Lage der Drehachse F angibt, weist der mit dem Punkt F deckungsgleich liegender Referenzpunkt Rf dieselben Koordinaten wie die Drehachse F auf. Die Koordinaten des Punktes F sind XMR und ZMR und wegen der genannten Ueberdeckung der Punkte F und Rf sind dies auch die Koordinaten des Referenzpunktes Rf.

Die Winkellage des Punktes Rf gegenüber dem Nullpunkt M im Koordinatensystem der Maschine wird dadurch ermittelt, dass der Schleifkopf 16 vom Nullpunkt M in den Referenzpunkt Rf zunächst in der einen Richtung, beispielsweise in der x-Richtung, und dann in der anderen Richtung, d.h. in der z-Richtung, bewegt wird. Hierbei liefert das Massystem der Maschine die Angaben über den Winkel jenes Vektors, welcher die Punkte M und Rf verbindet. Die Maschine bzw. das Masystem derselben dient somit ebenfalls als eine Messvorrichtung.

Da die Distanz R zwischen dem Schlittenbezugspunkt F und dem Messpunkt V in der Kugel 21 bereits bekannt ist, kann man diese Strecke R anhand der Koordinaten XVF und ZVF zum Ausdruck bringen. Aus diesen Koordinaten können Koordinaten WegX und WegZ jener Distanz ermittelt werden, welche zwischen dem Messpunkt V und der Mitte der Messraumes in der Messvorrichtung 25 liegt. Hierbei geht man davon aus, dass die Abstände zwischen dem Maschinen-Nullpunkt M und den Achsen der Messbolzen 33 bzw. 34 durch die Konstruktion der Messvorrichtung 25 gegeben und daher bekannt sind.

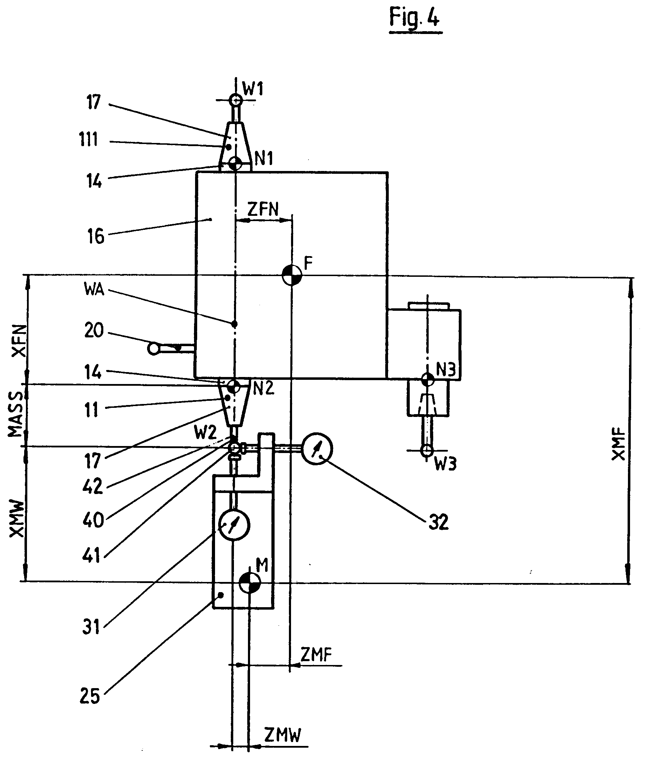

Fig. 4 zeigt einen Ausschnitt aus Fig. 1, in welchem von der Maschine nur diejenigen Teile derselben dargestellt sind, die für die Ausmessung der Lage eines Werkzeug-Einspannpunktes N gegenüber der Drehachse F des Schleifkopfes 16 erforderlich sind. Am Schleifkopf 16 befinden sich oft zumindest zwei Wellen 11, 111 usw. Eine dieser Wellen 11 bzw. 111 kann beispielsweise ein Werkzeug für das Aussenrundschleifen und die andere Welle kann ein Werkzeug für das Innenrundschleifen (nicht dargestellt) tragen. Im Bereich der grösseren Grundfläche des Konusses 17 schliesst sich dieser einstückig an den zylinderförmigen Teil 14 der Welle 11 bzw. 111 an. In der Mitte der genannten Konusgrundfläche, d.h. auf der Wellenachse WA liegend, befindet sich jener Punkt N, welcher als Werkzeug-Einspannpunkt bezeichnet wird. Wenn der Kopf 16 mehr als eine Welle 11, 111 usw. aufweist, dann werden die Bezeichnungen dieser Wellen indexiert, d.h. sie werden mit N1, N2 usw. bezeichnet.

Zur Ermittlung der Lage des Werkzeug-Einspannpunktes N2 wird ein Messtaster 40 verwendet, welcher ebenfalls eine Kugel 41 und eine Distanzstange 42 aufweist, wie dies im Zusammenhang mit dem bereits beschriebenen Messtaster 20 dargelegt worden ist. Die Distanzstange 42 ist beim vorliegenden Taster 40 jedoch so ausgeführt, dass sie in eine Bohrung im Konus 17 der Welle 11 eingesetzt werden kann. Die Abmessungen der Stange 42 und der Bohrung im Konus 17 sind so gewählt, dass der Abstand zwischen dem Werkzeug-Einspannpunkt N2 und dem Messpunkt W2 in der Kugel 41 genau bekannt ist.

Die Messvorrichtung 25, welche sich im Nullpunkt M der Maschine befindet, wird mit der Kugel 41 des Messtasters 40 angefahren, wie dies in Fig. 4 dargestellt ist. Delta X und Delta Z sind dabei gleich Null, weil die Messuhren 31 und 32 dieser Vorrichtung 25 auf Null gestellt sind. Die Lage der Schwenkachse F des Schleifkopfes 16 ist, wie erörtert, bereits bekannt. Der Abstand zwischen dem Werkzeug-Einspannpunkt N2 und dem Drehachse F kann somit durch die Koordinaten XFN und ZFN, wie dies aus Fig. 4 ersichtlich ist, identifiziert werden. Wenn der Schleifkopf 16 mehrere Wellen aufweist, dann wird jede jeweils mit dem Messtaster 40 versehen, wonach die Messvorrichtung 25 jeweils angefahren wird usw. Hiernach werden die Koordinaten der entsprechenden Punkte N ermittelt und gespeichert.

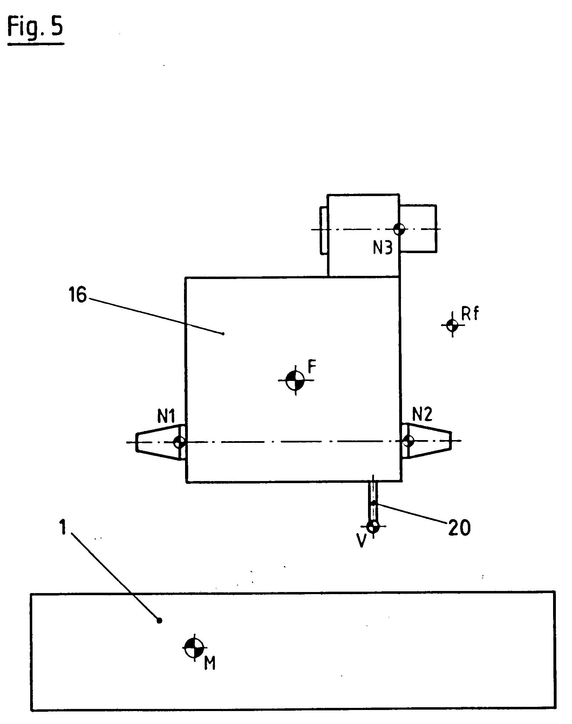

Fig. 5 zeigt jene Punkte der Maschine, deren Lagen am Ende der Ausmessung der Maschine bekannt sind. Diese sind der Bezugspunkt F am Schleifschlitten 15 und am Schleifkopf 16, der Messpunkt V am Messtaster 20, der Referenzpunkt Rf sowie die Werkzeugeinspannpunkte N1, N2 usw.

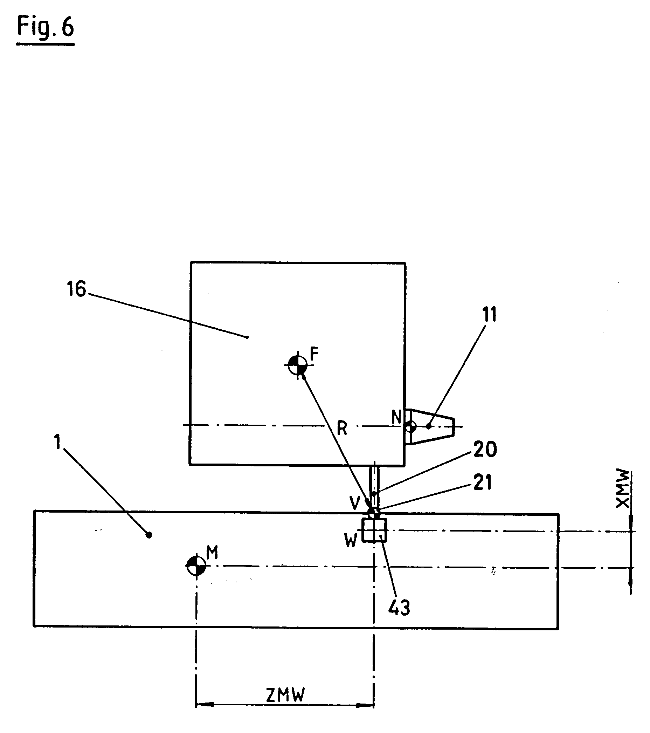

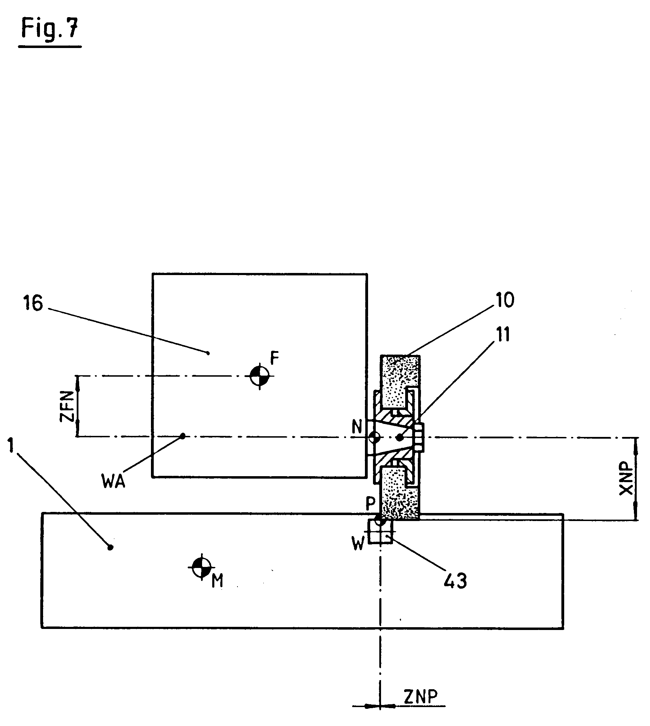

Ferner wird die Schleifscheibe 10 in diesem Verfahren ausgemessen. Dies erfolgt in zwei Schritten, wobei der erste Schritt anhand von Fig. 6 und der zweite Schritt anhand von Fig. 7 beschrieben werden kann. Zunächst wird ein Messwürfel 43 oder eine andere jedoch zu demselben Zweck verwendbare Vorrichtung am Werkstückschlitten 4 angebracht. Dieser Messwürfel 43 wird so ausgerichtet, dass die Wände desselben parallel zur X- und Z-Achse verlaufen. Mit am Schleifkopf 16 angesetztem Messtaster 20 wird zunächst eine erste Wand des Messwürfels 43 und dann eine zweite Wand desselben abgetastet, welche zur erst genannten Wand des Messwürfels 43 rechtwinklig steht. Da der Abstand R zwischen F und V sowie der Durchmesser der Kugel 21 genau bekannt sind, kann die Lage der Mitte W des Messwürfels 43 von genau bekannten Abmessungen genau ermittelt und dann gespeichert werden.

Hiernach wird die Lage der Bearbeitungskante P der Schleifscheibe 10 (Fig. 7) ermittelt. Der Abstand zwischen der Achse WA der Welle 11 für die Schleifscheibe 10 und dem Punkt F ist bereits bekannt und dieser ist durch ZFN angegeben, wie dies im Zusammenhang mit Fig. 4 erläutert worden ist. Es muss auch der Abstand XNP zwischen dem Werkzeug-Einspannpunkt N an der Welle 11 und der Bearbeitungskante P der Schleifscheibe 10 ermittelt werden. Da die Lage der oberen horizontalen und parallel zur Z-Achse verlaufenden Wand des Würfels 43 bekannt ist, genügt es, die Schleifscheibe 10 auf diese Würfelwand aufzusetzen. Aus der Strecke, welche die Achse F bei diesem Vorschub in der X-Richtung zurückgelegt hat, kann der Abstand XNP ermittelt werden. Dieser wird anschliessend ebenfalls gespeichert.

Ferner ist noch der Abstand ZNP zu ermitteln, welcher die Lage der Bearbeitugskante P der Schleifscheibe 10 in der Z-Richtung gegenüber dem Einspannpunkt N derselben angibt. Aus einer der vorstehend beschriebenen Messungen sind die Lagen der Seitenwände des Messwürfels 43 in der Z-Richtung ebenfalls bekannt. Zur Ermittlung von ZNP wird eine der Seitenwände des Messwürfels 43 mit jener parallel zur X-Achse verlaufenden Stirnwand der Schleifscheibe 10 angefahren, deren Kreuzungspunk mit der Umlauffläche der Scheibe 10 den Punkt P definiert. Da der Abstand zwischen F und N sowie die Lage der angefahrenen Würfelseitenwand bereits bekannt sind, kann ZNP aus der Grösse des Vorschubes des Punktes F ermitelt werden, welcher zum Anfahren der Würfelseitenwand erforderlich war.

Zum Abrichten der Schleifscheibe 10 wird normalerweise ein Abrichtdiamant 44 verwendet. Damit das Abrichten der Schleifscheibe 10 durch die Maschine ebenfalls automatisch durchgeführt werden kann, muss die Lage des Abrichtdiamantes 44 ebenfalls genau bekannt sein. Der Diamant 44 wird an einer etwas abseits liegenden Stelle des Werkstückschlittens 4 und in der Nähe des Messwürfels 43 angeordnet. Da die Lage der Arbeitskante P der Schleifscheibe 10 jetzt bereits bekannt ist, genügt es, den Diamanten 44 mit der Arbeitskante P der Schleifscheibe 10 an zwei Wänden desselben anzufahren und jene Koordinaten der Schwenkachse F zu speichern, welche die Arbeitskante P dabei aufweist.

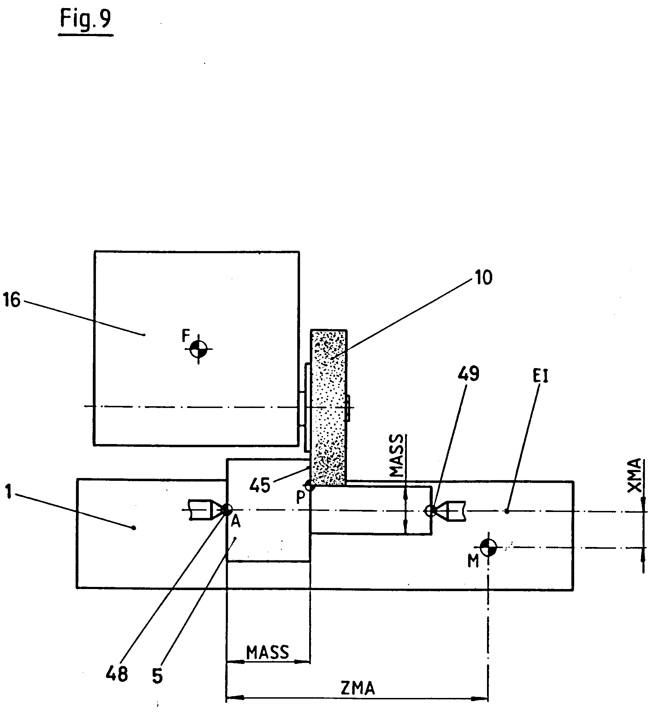

Damit ein Werkstück 5 bearbeitet werden kann, muss die Lage des Nullpunktes A desselben bekannt sein. Die Ermittlung dieses Nullpunktes A kann anhand von Fig. 9 erläutert werden. Der Abstand zwischen der Schwenkachse F und der Arbeitskante P der Schleifscheibe 10 ist aus dem vorangehenden Verfahrensschritt bekannt. Das Werkstück 5 ist zwischen dem Werkstückhalter 71 und dem Reitstock 72 eingespannt. Im dargestellten Fall weist das Werkstück 5 eine Schulter 45 auf. Der Nullpunkt A des Werkstückes 5 befindet sich an jener Stirnwand desselben, an der der Werkstückhalter 71 angreift. Der Durchmesser des dickeren und des dünneren Abschnittes des Werkstückes 5 sowie die Länge der genannten Werkstückabschnitte ist durch die jeweilige Art des Werkstückes 5 gegeben. Diese Abmessungen sind in Fig. 9 als MASS bezeichnet.

Die in der X-Richtung verlaufende Entfernung XMA zwischen der Achse EI, die durch die Werkstückbefestigungspunkte 48 und 49 hindurchgeht, und dem Maschinen-Nullpunkt M, ist durch die Konstruktion der Maschine gegeben und somit genau bekannt. Die MASSE des Werkstückes 5 sind ebenfalls genau bekannt. Nicht genau bekannt ist lediglich die Lage des Werkstück-Nullpunktes A, d.h. des Punktes 48, in der Z-Richtung, weil die Einspannmittel 48 und 49 in der Z-Richtung verschiebbar sind.

Nachdem das Werkstück 5 zwischen den Mittel 48 und 49 eingespannt worden ist, wird die Arbeitskante P der Schleifscheibe 10 in das Innere der Schulter 45 eingeführt. Der in der Radialrichtung verlaufende Schenkel der Schulter 45 wird durch die Scheibe 10 angeschliffen und dann wird die Lage der Arbeitskante P durch das Massystem der Maschine ermittelt. Unter der Berücksichtigung der bekannten Länge des dickeren Abschnittes des Werkstückes 5 und des bekannten Abstandes zwischen der Arbeitskante P und dem Nullpunkt M der Maschine ergibt sich der Abstand ZMA zwischen dem Nullpunkt M der Maschine und dem Nullpunkt A des Werkstückes 5 in der Z-Richtung.

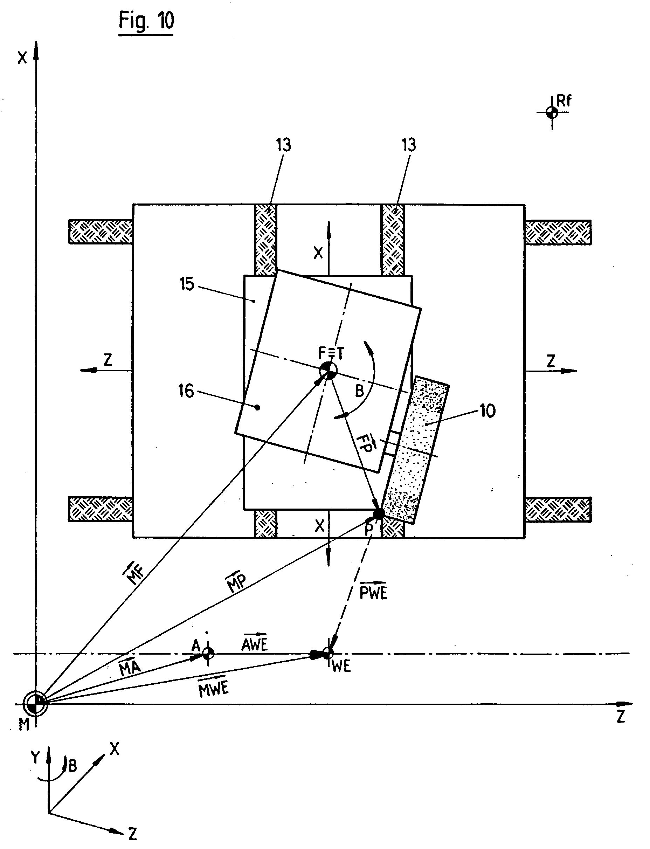

Für die eigentliche Bearbeitung von Werkstücken 5 ist es zweckdienlich die genannten Strecken in der Richtung der Achsen X und Z als Komponenten von Vektoren zu behandeln und aus diesen Strecken die entsprechenden Vektoren zu ermitteln. In Fig. 10 sind die wesentlichen Bestandteile der Maschine gemäss Fig. 1 zumindest schematisch wiedergegeben. Diesen Bestandteilen sind Vektoren zugeordnet, welche sich aus den ermittelten Komponenten ergaben. Diese Vektoren können die Grundlage für das Programm zur numerisch gesteuerte Bearbeitung von Werkstücken dienen.

Das Maschinenbett 1 ist in Fig. 10 durch den Nullpunkt M der Maschine angedeutet. Das Werkstück 5 ist durch den Nullpunkt A sowie durch einen Punkt WE desselben angedeutet, an dem die Schleifscheibe 10 zur Bearbeitung des Werkstückes an dieser Stelle angreifen soll. Aus den wie vorstehend beschrieben ermittelten Komponenten ergaben sich der Vektor MF zwischen dem Maschinen-Nullpunkt M und dem Schlittenbezugspunkt F, der Vektor MP zwischen dem Maschinen-Nullpunkt M und der Arbeitskante P der Schleifscheibe 10 sowie der Vektor MA zwischen dem Maschinen-Nullpunkt M und dem Nullpunkt A des Werkstückes.

Der in Fig. 10 eingezeichnete Vektor MWE ergibt sich aus der Vorgabe, dass diese Stelle WE des Werkstückes behandelt werden soll. Bevor diese Stelle WE des Werkstückes behandelt wird, befindet sich die Arbeitskante P der Schleifscheibe 10 in der Regel in einem Abstand von dieser Werkstückstelle WE. Das Programm muss aus der Lage der Werkstückstelle WE und der Kante P der Schleifscheibe 10 im Massystem der Maschine den Vektor MWE ermitteln. Ferner muss das Programm die Komponenten dieses Vektors MWE ermitteln und den Antrieben der Maschine werden dann entsprechende Steuersignale zugeführt, welche das Heranführen der Arbeitskante P der Schleifscheibe 10 an die Werkstückstelle WE ermöglichen.

## Patentansprüche

1. Verfahren zur numerisch steuerbaren Bearbeitung eines Werkstückes (5) an einer Schleifmaschine, welche einen Halter (4) für das Werkstück (5) sowie einen min einer Schleifscheibe (10) ausgerüsteten Schleifkopf (16) aufweist, wobei dieser Schleifkopf auf einem Werkzeugschlitten (15) schwenkbar gelagert und zusammen mit diesem gegenüber dem Werkstückhalter (4) verschiebbar ist, dadurch gekennzeichnet, dass die Lage der im Arbeitsbereich der Maschine liegenden Punkte, wie des Nullpunktes (A) des Werkstückes (5), des Drehzentrums (F) des schwenkbaren Schleifkopfes (16), des Einspannpunktes (N) der Schleifscheibe (10) und der Arbeitskante (P) der Schleifscheibe (10) ermittelt wird, dass die Koordinatenangaben der Punkte zu den Grunddaten des Bearbeitungsprogramms der Maschine gemacht werden und dass das Werkstück (5) unter der Berücksichtigung dieser Koordinatenangaben bearbeitet wird.

2. Verfahren nach Anspruch 1, dadurch gekennzeichnet, dass am Schleifkopf (16), vorteilhaft an seinem Gehäuse (23), ein Messtaster (20) und in einem Nullpunkt (M) der Maschine eine Messvorrichtung (25) angebracht werden, dass der Kopf (21) des Messtasters (20) einen Messpunkt (V) aufweist, welcher zur Bestimmung der Lage des Tasterkopfes (21) im Koordinatensystem (X,Z) der Maschine dient, dass die Koordinaten der bestehenden Lage bzw. der Anfangslage des Tasterkopfes (21) mit Hilfe der Messvorrichtung (25) ermittelt werden, dass danach mit Hilfe einer Steuereinheit, welche einen der Bestandteile der Maschine darstellt, ermittelt wird, wo sich der Messpunkt (V) des Tasterkopfes (21) befinden würde bzw. sollte, wenn der um eine Schwenkachse (30) bzw. um das Drehzentrum (F) schwenkbarer Schleifkopf (16) um einen vorgegebenen Winkel verschwenkt wird, dass danach der Schleifkopf (16) um den vorgegebenen Winkel geschwenkt wird, wobei der Messpunkt (V) hierbei eine Bahn (B) durchläuft, und dass geprüft wird, ob es eine Abweichung zwischen der tatsächlichen und der im voraus errechneten End- bzw. Schwenklage des Tasterkopfes (21) gibt.

3. Verfahren nach Anspruch 2, dadurch gekennzeichnet, dass der Schleifkopf (16), wenn es eine Abweichung zwischen der tatsächlichen und der errechneten Endlage des Tasterkopfes (21) gab, aus seiner Endlage in seine Anfangslage zurückgeschwenkt wird, dass die Welle (30) des Schleifkopfes (16) innerhalb des Koordinatensystems (X,Z) der Maschine verschoben wird, so dass die Schwenkachse (F) des Schleifkopfes (16) in eine andere Lage (F') gebracht wird, dass die nun zu erwartende Schwenklage des Tasterkopfes (21) bei Verschwenkung um einen vorgegebenen Winkel errechnet wird, dass der Schleifkopf (16) um den vorgegebenen Winkel geschwenkt wird und dass geprüft wird, ob es eine Abweichung zwischen der tatsächlichen und der errechneten Schwenklage des Tasterkopfes gibt.

4. Verfahren nach Anspruch 2 oder 3, dadurch gekennzeichnet, dass die Koordinaten der Schwenkachse (F) des Schleifkopfes (16) gespeichert werden, sobald es keine Abweichung mehr zwischen der tatsächlichen und der errechneten Schwenklage des Messpunktes (V) am Tasterkopf (21) gibt.

5. Verfahren nach Anspruch 4, dadurch gekennzeichnet, dass die Koordinaten der Lage einiger Punkte an der Bewegungsbahn (B) des Messpunktes (V) am Tasterkopf (21), vorteilhaft mit Hilfe der am Werkstückhalter angebrachten Messvorrichtung (25), gemessen werden und dass ausgehend von den Koordinaten dieser Punkte sowie von den Koordinaten der Lage des Drehzentrums (F) des Schleifkopfes (16) der Radius (R) jenes Kreisbogens ermittelt wird, welchen die Bewegungsbahn (B) bildet.

6. Verfahren nach Anspruch 2, dadurch gekennzeichnet, dass jener Welle (11) am Schleifkopf (16), auf der eine Schleifscheibe (10) sitzen soll, ein Messtaster (40) zugeordnet wird, dass bei diesem der Abstand zwischen dem Messpunkt (41) desselben und dem Einspannpunkt (N) des Werkzeuges bzw. der Schleifscheibe (10) an der Welle (11) bekannt ist, dass die Messvorrichtung (25), welche im Nullpunkt (M) der Maschine angeordnet ist, mit dem Messtaster (40) angefahren wird und dass die Koordinaten des Einspannpunktes (N) in der Steuereinheit gespeichert werden.

7. Verfahren nach Anspruch 2, dadurch gekennzeichnet, dass ein Messwürfel (43) am Werkstückhalter angebracht wird, dass dieser Messwürfel mit dem Taster (20) am Gehäuse (23) des Schleifkopfes (16) angefahren wird und dass die Koordinaten des Mittelpunktes (W) des Messwürfels (43) gespeichert werden.

8. Verfahren nach Anspruch 7, dadurch gekennzeichnet, dass zur Ermittlung der Lage einer der Arbeitskanten (P1 bzw. p2) der Schleifscheibe (10) der Messwürfel (43) angefahren wird.

9. Verfahren nach Anspruch 8, dadurch gekennzeichnet, dass die Lage des Mittelpunktes (D) eines Abrichtdiamanten (44) ermittelt wird, indem dieser mit dem Werkzeug (10) angefahren wird.

10. Verfahren nach Anspruch 8, dadurch gekennzeichnet, dass die Lage des Nullpunktes (A) des Werkstückes (5) ermittelt wird, indem eine Schulter an diesem mit einer der Arbeitskanten (P bzw. P1 bzw. P2) der Schleifscheibe (10) angefahren wird und dass die entsprechenden Koordinaten gespeichert werden.

11. Verfahren nach Anspruch 8, dadurch gekennzeichnet, dass die Koordinaten (X,Z) wenigstens einer der Kanten (P1 bzw. P2) der Schleifscheibe (10) ermittelt werden, nachdem der Schleifkopf (16) eine Schwenkbewegung um die Achse (F) des Schleifkopfes (16) um einen vorgegebenen Zentriwinkel Beta ausgeführt hat und dass die geschwenkte, neue Position der Scheibenkante (P) anhand der Koordinaten (X,Z) zum Ausdruck gebracht wird.

12. Verfahren nach Anspruch 4 oder 11, dadurch gekennzeichnet, dass die Lage der Schwenkwelle (30) und somit auch der Schwenkachse (F) des Schleifkopfes (16) gleichzeitig mit einer Schwenkung der Schleifscheibe (10) um die Achse (F) derart geändert wird, dass die Schleifscheibe (10) um eine ihrer Schleifkanten (P) geschwenkt wird, ohne dass sich die Koordinaten (X,Z) dieser Schleifkante (P) ändern.

## Claims

1. Method of machining a workpiece (5) on a grinding machine by numerical control, which grinding machine has a holder (4) for the workpiece (5) as well as a wheelhead (16) equipped with a grinding wheel (10), this wheelhead being swivel-mounted on a tool slide (15) and being displaceable together with the latter relative to the work holder (4), characterized in that the position of the points lying in the working area of the machine, such as the zero point (A) of the workpiece (5), the rotation centre (F) of the swivelling wheelhead (16), the clamping point (N) of the grinding wheel (10) and the working edge (P) of the grinding wheel (10), are determined, in that the coordinate details of the points are made the basic data of the machining program of the machine, and in that the workpiece (5) is machined with regard to these coordinate details.

2. Method according to Claim 1, characterized in that a measuring probe (20) is attached to the wheelhead (16), advantageously to its housing (23), and a measuring device (25) is attached at a zero point (M) of the machine, in that the head (21) of the measuring probe (20) has a measuring point (V) which serves to determine the position of the probe head (21) in the coordinate system (X, Z) of the machine, in that the coordinates of the existing position or initial position of the probe head (21) are determined by means of the measuring device (25), in that a control unit which constitutes one of the components of the machine then determines where the measuring point (V) of the probe head (21) would be or should be if the wheelhead (16) capable of swivelling about a swivel axis (30) or about the rotation centre (F) is swivelled by a predetermined angle, in that the wheelhead (16) is then swivelled by the predetermined angle, the measuring point (V) covering a path (B) in the process, and in that a check is carried out to determine whether there is a deviation between the actual end or swivel position of the probe head (21) and the end or swivel position of the same calculated in advance.

3. Method according to Claim 2, characterized in that the wheelhead (16), if there has been a deviation between the actual and the calculated end position of the probe head (21), is swung back from its end position into its initial position, in that the shaft (30) of the wheelhead (16) is displaced within the coordinate system (X, Z) of the machine so that the swivel axis (F) of the wheelhead (16) is brought into another position (F'), in that the swivel position of the probe head (21) now to be expected is calculated during swivelling by a predetermined angle, in that the wheelhead (16) is swivelled by the predetermined angle, and in that a check is carried out to determine whether there is a deviation between the actual and the calculated swivel position of the probe head.

4. Method according to Claim 2 or 3, characterized in that the coordinates of the swivel axis (F) of the wheelhead (16) are stored as soon as there is no longer a deviation between the actual and the calculated swivel position of the measuring point (V) at the probe head (21).

5. Method according to Claim 4, characterized in that the coordinates of the position of some points on the motion path (B) of the measuring point (V) at the probe head (21) are measured, advantageously by means of the measuring device (25) attached to the work holder, and in that, starting from the coordinates of these points as well as from the coordinates of the position of the rotation centre (F) of the wheelhead (16), the radius (R) of that circular arc which the motion path (B) forms is determined.

6. Method according to Claim 2, characterized in that a measuring probe (40) is allocated to that shaft (11) on the wheelhead (16) on which a grinding wheel (10) is to sit, in that the distance between the measuring point (41) of the measuring probe (40) and the clamping point (N) of the tool or the grinding wheel (10) on the shaft (11) is known at the measuring probe (40), in that the measuring device (25) which is arranged at the zero point (M) of the machine is approached by the measuring probe (40), and in that the coordinates of the clamping point (N) are stored in the control unit.

7. Method according to Claim 2, characterized in that a measuring cube (43) is attached to the work holder, in that this measuring cube is approached by the probe (20) on the housing (23) of the wheelhead (16), and in that the coordinates of the centre point (W) of the measuring cube (43) are stored.

8. Method according to Claim 7, characterized in that the measuring cube (43) is approached to determine the position of one of the working edges (P1 or P2) of the grinding wheel (10).

9. Method according to Claim 8, characterized in that the position of the centre point (D) of a dressing diamond (44) is determined by the latter being approached by the tool (10).

10. Method according to Claim 8, characterized in that the position of the zero point (A) of the workpiece (5) is determined by a shoulder on the latter being approached by one of the working edges (P or P1 or P2) of the grinding wheel (10), and in that the corresponding coordinates are stored.

11. Method according to Claim 8, characterized in that the coordinates (X, Z) of at least one of the edges (P1 or P2) of the grinding wheel (10) are determined after the wheelhead (16) has performed a swivelling motion about the axis (F) of the wheelhead (16) by a predetermined centre angle beta, and in that the new swivelled position of the wheel edge (P) is expressed with reference to the coordinates (X, Z).

12. Method according to Claim 4 or 11, characterized in that the position of the swivel shaft (30) and thus also of the swivel axis (F) of the wheelhead (16) is changed simultaneously with a swivelling motion of the grinding wheel (10) about the axis (F) in such a way that the grinding wheel (10) is swivelled about one of its grinding edges (P) without the coordinates (X, Z) of this grinding edge (P) changing.

## Revendications

1. Procédé pour l'usinage à commande numérique d'une pièce (5) sur une rectifieuse, qui présente un support (4) pour la pièce (5) ainsi qu'une tête de rectification (16) équipée d'une meule (10), dans laquelle cette tête de rectification est supportée de façon pivotante sur un chariot porte-outil (15) et peut coulisser avec celui-ci par rapport au support (4) de la pièce, caractérisé en ce que l'on détermine la position des points se trouvant dans la zone de travail de la machine, comme le point zéro (A) de la pièce (5), le centre de rotation (F) de la tête de rectification pivotante (16), le point de fixation (N) de la meule (10) et l'arête de travail (P) de la meule (10), en ce que l'on transforme les données de coordonnées des points en données de base pour le programme d'usinage de la machine et en ce que l'on usine la pièce (5) en tenant compte de ces données de coordonnées.

2. Procédé suivant la revendication 1, caractérisé en ce que l'on monte un palpeur de mesure (20) sur la tête de rectification (16), avantageusement sur son bâti (23), et un dispositif de mesure (25) en un point zéro (M) de la machine, en ce que la tête (21) du palpeur de mesure (20) présente un point de mesure (V), qui sert à la détermination de la position de la tête (21) du palpeur dans le système de coordonnées (X, Z) de la machine, en ce que l'on détermine les coordonnées de la position existante respectivement de la position initiale de la tête (21) du palpeur à l'aide du dispositif de mesure (25), en ce que l'on détermine ensuite, à l'aide d'une unité de commande qui représente un des composants de la machine, l'endroit où se trouverait respectivement où devrait se trouver le point de mesure (V) de la tête (21) du palpeur lorsque la tête de rectification (16) pouvant pivoter autour d'un axe de pivotement (30) respectivement autour d'un centre de rotation (F) a pivoté d'un angle prédéterminé, en ce que l'on fait ensuite pivoter la tête de rectification (16) de l'angle prédéterminé, le point de mesure (V) décrivant à cette occasion une trajectoire (B), et en ce que l'on vérifie s'il existe un écart entre la position effective et la position finale respectivement la position de pivotement préalablement calculée de la tête (21) du palpeur.

3. Procédé suivant la revendication 2, caractérisé en ce que l'on ramène, en la faisant pivoter en arrière, la tête de rectification (16) de sa position finale à sa position initiale s'il existe un écart entre la position finale effective et la position finale calculée de la tête (21) du palpeur, en ce que l'on déplace l'arbre (30) de la tête de rectification (16) à l'intérieur du système de coordonnées (X, Z) de la machine, de telle façon que l'axe de pivotement (F) de la tête de rectification (16) soit amené dans une autre position (F'), en ce que l'on calcule la position de pivotement de la tête (21) du palpeur à attendre lors du pivotement d'un angle prédéterminé, en ce que l'on fait pivoter la tête de rectification (16) de l'angle prédéterminé et en ce que l'on vérifie s'il existe un écart entre la position effective et la position calculée de pivotement de la tête du palpeur.

4. Procédé suivant la revendication 2 ou 3, caractérisé en ce que l'on mémorise les coordonnées de l'axe de pivotement (F) de la tête de rectification (16), dès qu'il n'existe plus d'écart entre la position effective et la position calculée de pivotement du point de mesure (V) sur la tête (21) du palpeur.

5. Procédé suivant la revendication 4, caractérisé en ce que l'on mesure les coordonnées de la position de quelques points sur la trajectoire (B) du mouvement du point de mesure (V) sur la tête (21) du palpeur, avantageusement à l'aide du dispositif de mesure (25) monté sur le support de la pièce, et en ce qu'à partir des coordonnées de ces points ainsi que des coordonnées de la position du centre de rotation (F) de la tête de rectification (16), on détermine le rayon (R) de l'arc de cercle que forme la trajectoire (B) du mouvement.

6. Procédé suivant la revendication 2, caractérisé en ce qu'un palpeur de mesure (40) est associé à l'arbre (11) de la tête de rectification (16) sur lequel doit se trouver une meule (10), en ce que l'on connaît pour celui-ci la distance entre le point de mesure (41) de celui-ci et le point de fixation (N) de l'outil respectivement de la meule (10) sur l'arbre (11), en ce que l'on amène le dispositif de mesure (25), qui est disposé au point zéro (M) de la machine, en contact avec le palpeur de mesure (40) et en ce que l'on mémorise les coordonnées du point de fixation (N) dans l'unité de commande.

7. Procédé suivant la revendication 2, caractérisé en ce que l'on monte un cube de mesure (43) sur le support de la pièce, en ce que l'on amène ce cube de mesure en contact avec le palpeur (20) prévu sur le bâti (23) de la tête de rectification (16) et en ce que l'on mémorise les coordonnées du point médian (W) du cube de mesure (43).

8. Procédé suivant la revendication 7, caractérisé en ce que l'on amène le cube de mesure (43) en contact pour déterminer la position d'une des arêtes de travail (P1 respectivement P2) de la meule (10).

9. Procédé suivant la revendication 8, caractérisé en ce que l'on détermine la position du point médian (D) d'un diamant dresse-meule (44) en amenant celui-ci en contact avec l'outil (10).

10. Procédé suivant la revendication 8, caractérisé en ce que l'on détermine la position du point zéro (A) de la pièce (5), en amenant un épaulement de celle-ci en contact avec une des arêtes de travail (P respectivement P1 respectivement P2) de la meule (10) et en ce que l'on mémorise les coordonnées correspondantes.

11. Procédé suivant la revendication 8, caractérisé en ce que l'on détermine les coordonnées (X, Z) d'au moins une des arêtes (P1 respectivement P2) de la meule (10), après que la tête de rectification (16) ait accompli un mouvement pivotant d'un angle au centre bêta autour de l'axe (F) de la tête de rectification (16) et en ce que l'on exprime la nouvelle position, après pivotement, de l'arête (P) de la meule à l'aide des coordonnées (X, Z).

12. Procédé suivant la revendication 4 ou 11, caractérisé en ce que l'on modifie la position de l'arbre de pivotement (30) et ainsi aussi celle de l'axe de pivotement (F) de la tête de rectification (16) en même temps qu'avec un pivotement de la meule (10) autour de l'axe (F) de telle façon que la meule (10) pivote autour d'une de ses arêtes de rectification (P) sans que les coordonnées (X, Z) de cette arête de rectification (P) ne se modifient.
